# EUROPÄISCHE PATENTANMELDUNG

(11) **EP 3 291 422 A1**
(43) Veröffentlichungstag der Anmeldung: **07.03.2018**
(21) Anmeldenummer: 16187208.0
(22) Anmeldetag: 05.09.2016
(51) Int. Cl.: H02K 9/10

(54) **VERFAHREN ZUM BETRIEB EINES GENERATORS MIT EINER KÜHLEINRICHTUNG**

(71) Anmelder: Siemens Aktiengesellschaft, 80333 München (DE)
(72) Erfinder: Baca, Matthias, 44534 Lünen (DE); Evenkamp, Monja, 45128 Essen (DE); Gertz, Simon, 40229 Düsseldorf (DE); Grünewald, Dominik, 45479 Mülheim an der Ruhr (DE); Kowalski, Matthias, 45478 Mülheim an der Ruhr (DE)

(57) **Zusammenfassung**

Die Erfindung betrifft ein Verfahren zum Betrieb eines Generators (1) mit einer Kühleinrichtung (2) zum Kühlen zumindest einer Generatorkomponente (4) des Generators (1), mit den Schritten:
Erfassen eines Betriebspunktes des Generators (1), und
zumindest teilweises Schließen und/oder Öffnen von kühlmittelführenden Zweigen (14, 15) der Kühleinrichtung (2) auf das Erfassen eines Betriebspunktes mit geringem Kühlbedarf hin.

## Beschreibung

Die Erfindung betrifft ein Verfahren zum Betrieb eines Generators mit einer Kühleinrichtung.

In der elektrischen Energieversorgung besteht weltweit der Trend, zunehmend auf erneuerbare Energien zu setzen. Da die Wirtschaftlichkeit von Erzeugungsanlagen im Bereich erneuerbarer Energien aber stark von deren Standort abhängt, wie z.B. bei Offshore-Windkraftanlagen, ergibt sich zunehmend das Problem, dass elektrische Energie über große Distanzen transportiert werden muss. Für den Transport der elektrischen Energie im Hoch- und Höchstspannungsnetz wird jedoch Blindleistung benötigt, um die Stabilität des Versorgungsnetzes zu gewährleisten. Generatoren in konventionellen (thermischen) Kraftwerken sind in der Lage, diese Blindleistung als Nebenprodukt zur Verfügung zu stellen. Durch den Abbau konventioneller Kraftwerkskapazitäten entstehen jedoch Engpässe in der Blindleistungserzeugung.

Eine Möglichkeit, dem entgegen zu wirken, sind leistungselektronische Einrichtungen, welche über Kondensatorbänke die entsprechende Blindleistung zur Verfügung stellen. Diese sind jedoch durch fehlende rotierende Massen nur bedingt der Netzstabilität zuträglich und können zudem nur kapazitive Blindleistungen zur Verfügung stellen.

Phasenschieber sind hingegen eine Möglichkeit, kapazitive wie auch induktive Blindleistung zur Verfügung zu stellen und zusätzlich durch rotierende Massen das Versorgungsnetz zu unterstützen. Da ein Phasenschieber keine Wirkleistung einspeist, lassen sich keine Einnahmen mit dieser Maschine erzielen. Im Gegensatz zu normalen Kraftwerken wird sogar Wirkleistung aus dem Versorgungsnetz entnommen, d.h. motorische Antriebsleistung, die bezahlt werden muss. Der Leistungsbedarf eines Phasenschiebers trägt damit unmittelbar zu den Betriebskosten und der Wirtschaftlichkeit bei und wird daher in den Anschaffungskosten höher bewertet als bei konventionellen Kraftwerksgeneratoren. Um die wirtschaftliche Attraktivität eines Phasenschiebers zu steigern bleibt also nur die Betriebskosten, bestehend aus Wartungskosten und Verlustleistung, zu minimieren.

Es ist bekannt, Generatoren durch Entfernen eines Antriebs, wie z.B. einer Gas- oder Dampfturbine, direkt als Phasenschieber umzurüsten oder Generatoren direkt als Phasenschieber einzusetzen. Da es sich jedoch um Generatoren handelt, sind diese so ausgelegt, dass sie einen großen Bereich von Wirk- und Blindleistung abdecken. Entsprechend leistungsstark sind die Kühleinrichtungen derartiger Generatoren ausgelegt, deren Betrieb wiederum Betriebsenergie absorbiert.

Es ist daher Aufgabe der Erfindung, den Betrieb von Generatoren als Phasenschieber energieeffizienter zu gestalten.

Erfindungsgemäß werden bei einem Verfahren zum Betrieb eines Generators mit einer Kühleinrichtung zum Kühlen zumindest einer Generatorkomponente des Generators die Schritte Erfassen eines Betriebspunktes des Generators und zumindest teilweises Schließen und/oder Öffnen von kühlmittelführenden Zweigen des Generators auf das Erfassen eines Betriebspunktes mit geringem Kühlbedarf hin ausgeführt.

So kann Kühlmittel gezielt zu kühlenden Komponenten geführt werden, um diese betriebszustandsabhängig zu kühlen.

Gemäß einer Ausführungsform wird auf ein Erfassen eines Betriebspunktes mit Übererregung hin eine als Läuferkomponente des Generators ausgebildete Generatorkomponente mit Kühlmittel beaufschlagt. So kann speziell eine sich bei einem Betrieb mit Übererregung erwärmende Läuferkomponente des Generators gekühlt werden.

Gemäß einer weiteren Ausführungsform wird ein Zweig zur Versorgung einer Teilkühleinrichtung mit Kühlmittel geöffnet, wobei die Teilkühleinrichtung zur Kühlung der Läuferkomponente ausgebildet ist. Die Kühleinrichtung weist eine Sammelleitung auf, die sich in eine Mehrzahl von Zweigen verzweigt, die jeweils eine Teilkühleinrichtung mit Kühlmittel versorgen, um die der Teilkühleinrichtung zugeordnet Generatorkomponente, in diesem Fall die Läuferkomponente zu kühlen. Somit werden in Abhängigkeit von der Erregung beim Betrieb des Generators als Phasenschiebers gezielt besonders thermisch belastete Komponenten, hier die Läuferkomponente, gekühlt.

Gemäß einer weiteren Ausführungsform wird ein weiterer Zweig zur Versorgung einer weiteren Teilkühleinrichtung mit Kühlmittel zumindest teilweise geschlossen. Somit werden Komponenten, die weniger bzw. keiner Kühlung bedürfen weniger bzw. nicht gekühlt. So wird keine Energie für eine unnötige Kühlung aufgebracht und es kann mit der vorhandenen Kühlleistung die Kühlwirkung der zu kühlenden Komponente maximiert werden.

Gemäß einer weiteren Ausführungsform ist die weitere Teilkühleinrichtung zur Kühlung von Generatorkomponenten ausgebildet, die als Endbereiche von einen Generatorblechpaket des Generators ausgebildet sind. So kann speziell auf eine Kühlung von sich bei Übererregung nur geringfügig erwärmenden Komponenten zumindest teilweise verzichtet werden.

Gemäß einer weiteren Ausführungsform werden auf ein Erfassen eines Betriebs mit Untererregung hin die als Endbereiche vom einem Generatorblechpaket des Generators ausgebildete Generatorkomponenten mit Kühlmittel beaufschlagt. So können speziell sich bei einem Betrieb mit Übererregung erwärmende Endbereiche gekühlt werden.

Gemäß einer weiteren Ausführungsform wird ein Zweig zur Versorgung einer Teilkühleinrichtung mit Kühlmittel geöffnet, wobei die Teilkühleinrichtung zur Kühlung der Endbereiche ausgebildet ist. Somit versorgt ein Zweig eine den Endbereichen zugeordnete Teilkühleinrichtung mit Kühlmittel. Somit werden in Abhängigkeit von einer Untererregung beim Betrieb des Generators als Phasenschiebers gezielt besonders thermisch belastete Komponenten, hier Endbereiche, gekühlt.

Gemäß einer weiteren Ausführungsform wird ein weiterer Zweig zur Versorgung einer weiteren Teilkühleinrichtung mit Kühlmittel geschlossen. Auch so werden Komponenten, die keiner bzw. weniger Kühlung bedürfen nicht bzw. weniger gekühlt. Es wird also auch hier keine Energie für eine unnötige Kühlung aufgebracht und es kann mit der vorhandenen Kühlleistung die Kühlwirkung der zu kühlenden Komponente maximiert werden.

Gemäß einer weiteren Ausführungsform ist die weitere Teilkühleinrichtung zur Kühlung der Läuferkomponente ausgebildet. So wird auch hier speziell die Kühlung einer sich bei Untererregung weniger erwärmenden Komponente so weit wie möglich reduziert.

Ferner gehören zur Erfindung ein Generator zur Durchführung eines derartigen Verfahrens und eine Kühleinrichtung für einen derartigen Generator.

Im Folgenden wird eine bevorzugte Ausführungsform des erfindungsgemäßen Verfahrens anhand der beigefügten schematischen Zeichnungen erläutert. Es zeigt:
- Fig. 1: eine erste schematische Querschnittdarstellung eines Generators,
- Fig. 2: eine zweite schematische Querschnittdarstellung des in Figur 1 dargestellten Generators, und
- Fig. 3: eine schematische Darstellung weiterer Details einer Kühleinrichtung zur Kühlung des Generators.

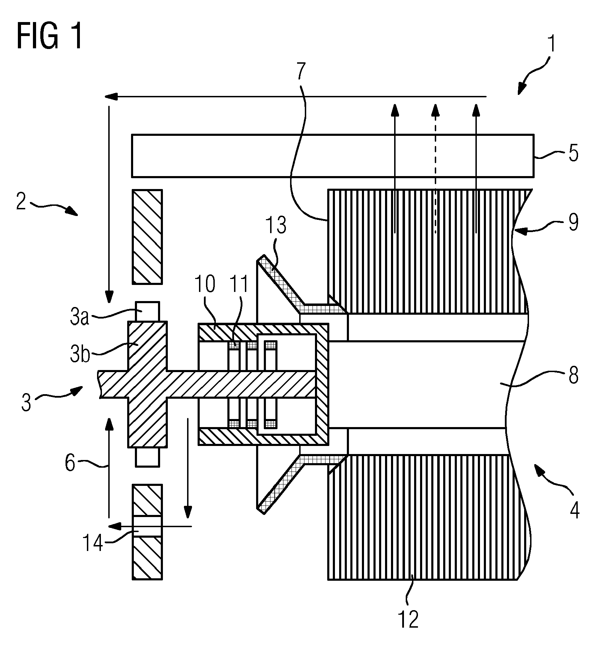

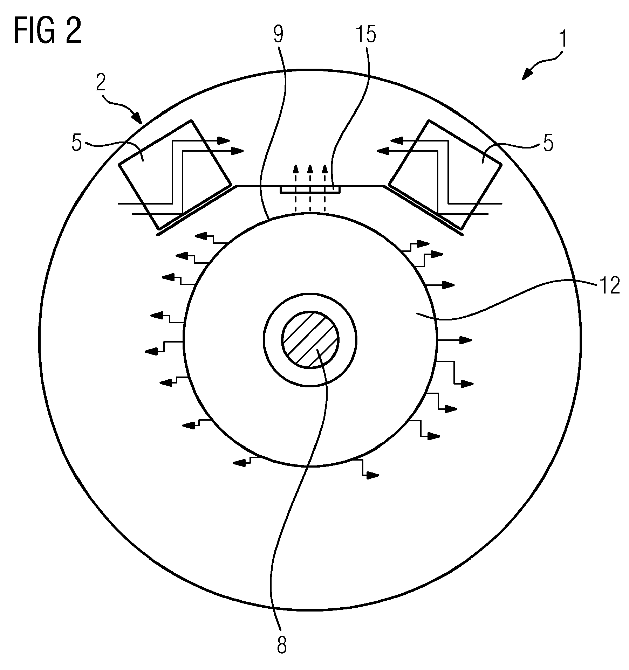

Es wird zunächst auf die Figuren 1 und 2 Bezug genommen.

Dargestellt ist ein Generator 1, der im vorliegenden Ausführungsbeispiel als Turbogenerator ausgebildet ist. Ein derartiger Generator 1 wird auch als Vollpolmaschine bezeichnet und ist eine Bauart eines Synchrongenerators, der z.B. von schnelllaufenden Gas- oder Dampfturbinen angetrieben wird und in Wärmekraftwerke mittlerer bis großer Größe zur Gewinnung von elektrischer Energie verwendet wird.

Der Generator 1 weist einen Rotor 8 und einen Ständer 9 auf. In den Figuren 1 und 2 ist eine zum Rotor 8 gehörende Läuferkappe 10 (siehe Fig. 2) und ein Rotorwickelkopf 11 (siehe Fig. 2) sowie ein zum Ständer 9 gehörendes Ständerblechpaket 12 und ein Ständerwickelkopf 13 dargestellt.

Ferner weist der Generator 1 im vorliegenden Ausführungsbeispiel eine Kühleinrichtung 2 auf. Die Kühleinrichtung 2 weist im vorliegenden Ausführungsbeispiel eine Kühlmittelfördereinrichtung 3 auf, bei der es sich im vorliegenden Ausführungsbeispiel um einen Lüfter handelt, von dem Gebläseschaufeln 3a und die Gebläsenabe 3b schematisch dargestellt sind.

Die Kühlmittelfördereinrichtung 3 fördert ein Kühlmittel, im vorliegenden Ausführungsbeispiel Luft, zu einer zu kühlenden Generatorkomponente 4 des Generators 1, im vorliegenden Ausführungsbeispiel z.B. zu dem Rotor 8 und dem Ständerblechpaket und der Ständerwicklung 12. Das erwärmte Kühlmittel wird dann durch einen Kühler 5 geleitet, in welchem dem Kühlmittel Wärme entzogen wird. Anschließend wird das abgekühlte Kühlmittel wieder der Kühlmittelfördereinrichtung 3 zugeführt.

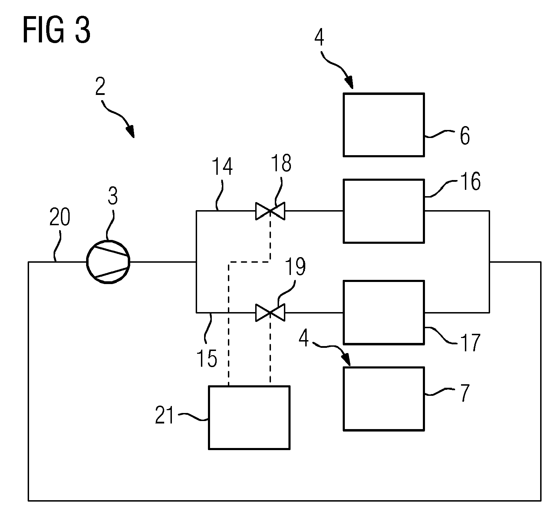

Es wird nun zusätzlich auf die Figur 3 Bezug genommen.

Dargestellt ist ein weiteres Detail der Kühleinrichtung 2. Neben der Kühlfördereinrichtung 3 ist im vorliegenden Ausführungsbeispiel eine erste Teilkühleinrichtung 16 und eine zweite Teilkühleinrichtung 17 vorgesehen zur Kühlung zu kühlender Generatorkomponenten 4 des Generators 1. Bei den zu kühlenden Generatorkomponenten 4 des Generators 1 handelt es sich im vorliegenden Ausführungsbeispiel um Läuferkomponenten 7 des Generators 1 und um Endbereiche 8 von einem Generatorblechpaket (Endzonen) des Generators 1.

Die erste Teilkühleinrichtung 16 dient zur Kühlung von den Läuferkomponenten 6 des Generators 1, während die zweite Teilkühleinrichtung 17 zur Kühlung von den Endbereichen 7 von einem Generatorblechpaket (Endzonen) vorgesehen ist. Neben diesen Teilkühleinrichtungen können noch weitere Teilkühleinrichtungen zur Kühlung weiterer oder andere Generatorkomponenten 4 des Generators 1 vorgesehen sein.

Es verzweigt eine von der Kühlmittelfördereinrichtung 3 ausgehende Sammelleitung 20 in zwei parallele Zweige 14, 15, wobei der erste Zweig 14 die erste Teilkühleinrichtung 16 und der zweite Zweig 15 die zweite Teilkühleinrichtung 17 mit Kühlmittel versorgt. Zum Öffnen bzw. Absperren des ersten Zweiges 14 und des zweiten Zweiges 15 sind jeweils ansteuerbare Ventile 18, 19 vorgesehen.

Eine Steuereinrichtung 21 kann vorgesehen sein, die erfasst, ob ein Betrieb des Generators 1 als Phasenschieber mit Übererregung oder Untererregung erfolgt. Auf ein Erfassen eines Betriebs mit Übererregung hin steuert die Steuereinrichtung 21 die Ventile 18, 19 derart an, dass der erste Zweig 14 von Kühlmittel durchflossen wird, während der zweite Zweig 15 zumindest teilweise geschlossen ist. Somit wird im vorliegenden Ausführungsbeispiel die Läuferkomponente 7 gekühlt.

Wird hingegen ein Betrieb mit Untererregung erfasst, steuert die Steuereinrichtung 21 die Ventile 18, 19 derart an, dass der zweite Zweig 15 von Kühlmittel durchflossen wird, während der erste Zweig 14 zumindest teilweise geschlossen ist. Somit werden im vorliegenden Ausführungsbeispiel Endbereiche 8 vor dem Generatorblechpaket gekühlt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb eines Generators (1) mit einer Kühleinrichtung (2) zum Kühlen zumindest einer Generatorkomponente (4) des Generators (1), mit den Schritten:
Erfassen eines Betriebspunktes des Generators (1), und
zumindest teilweises Öffnen und/oder Schließen von kühlmittelführenden Zweigen (14, 15) der Kühleinrichtung (2) auf das Erfassen eines Betriebspunktes mit geringem Kühlbedarf hin.

2. Verfahren gemäß Anspruch 1,
wobei auf ein Erfassen eines Betriebspunktes mit Übererregung hin eine als Läuferkomponente (7) des Generators (1) ausgebildete Generatorkomponente (4) mit Kühlmittel beaufschlagt wird.

3. Verfahren gemäß Anspruch 2,
wobei ein Zweig (14) zur Versorgung einer Teilkühleinrichtung (16) mit Kühlmittel geöffnet wird, wobei die Teilkühleinrichtung (16) zur Kühlung der Läuferkomponente (7) ausgebildet ist.

4. Verfahren gemäß Anspruch 3,
wobei ein weiterer Zweig (15) zur Versorgung einer weiteren Teilkühleinrichtung (17) mit Kühlmittel geschlossen wird.

5. Verfahren gemäß Anspruch 4,
wobei die weitere Teilkühleinrichtung (17) zur Kühlung von Generatorkomponenten (4) ausgebildet ist, die als Endbereiche (8) von einen Generatorblechpaket des Generators (1) ausgebildet sind.

6. Verfahren gemäß einem der Ansprüche 1 bis 5,
wobei auf ein Erfassen eines Betriebspunktes mit Untererregung hin Generatorkomponenten (4) mit Kühlmittel beaufschlagt werden, die als Endbereiche (8) von einem Generatorblechpaket des Generators (1) ausgebildet sind.

7. Verfahren gemäß Anspruch 6,
wobei ein Zweig (15) zur Versorgung einer Teilkühleinrichtung (17) mit Kühlmittel geöffnet wird, wobei die Teilkühleinrichtung (17) zur Kühlung der Endbereiche (8) ausgebildet ist.

8. Verfahren gemäß Anspruch 7,
wobei ein weiterer Zweig (14) zur Versorgung einer weiteren Teilkühleinrichtung (16) mit Kühlmittel geschlossen wird.

9. Verfahren gemäß Anspruch 8,
wobei die weitere Teilkühleinrichtung (16) zur Kühlung der Läuferkomponente (7) ausgebildet ist.

10. Generator (1) mit einer Kühleinrichtung (2) zum Kühlen zumindest einer Generatorkomponente (4) des Generators (1), wobei die Kühleinrichtung (2) dazu ausgebildet ist, auf ein Erfassen eines Betriebspunktes des Generators (1) mit geringem Kühlbedarf hin zumindest teilweise kühlmittelführende Zweige (14, 15) der Kühleinrichtung (2) zu schließen und/oder zu öffnen.

11. Generator (1) gemäß Anspruch 10,
wobei der Generator (1) dazu ausgebildet ist, auf ein Erfassen eines Betriebspunktes mit Übererregung hin eine als Läuferkomponente (7) des Generators (1) ausgebildete Generatorkomponente (4) mit Kühlmittel zu beaufschlagen.

12. Generator (1) gemäß Anspruch 11,
wobei ein Zweig (14) zur Versorgung einer Teilkühleinrichtung (16) mit Kühlmittel geöffnet ist, wobei die Teilkühleinrichtung (16) zur Kühlung der Läuferkomponente (7) ausgebildet ist.

13. Generator (1) gemäß Anspruch 12,
wobei ein weiterer Zweig (15) zur Versorgung einer weiteren Teilkühleinrichtung (17) mit Kühlmittel geschlossen ist.

14. Generator (1) gemäß Anspruch 13,
wobei die weitere Teilkühleinrichtung (17) zur Kühlung von Generatorkomponenten (4) ausgebildet ist, die als Endbereiche (8) von einen Generatorblechpaket des Generators (1) ausgebildet sind.

15. Generator (1) gemäß einem der Ansprüche 10 bis 14,
wobei der Generator (1) dazu ausgebildet ist, auf ein Erfassen eines Betriebspunktes mit Untererregung hin als Endbereiche (8) vom einem Generatorblechpaket des Generators (1) ausgebildete Generatorkomponenten (4) mit Kühlmittel zu beaufschlagen.

16. Generator (1) gemäß Anspruch 16,
wobei ein Zweig (15) zur Versorgung einer Teilkühleinrichtung (17) mit Kühlmittel geöffnet ist, wobei die Teilkühleinrichtung (17) zur Kühlung der Endbereiche (8) ausgebildet ist.

17. Generator (1) gemäß Anspruch 16,
wobei ein weiterer Zweig (14) zur Versorgung einer weiteren Teilkühleinrichtung (16) mit Kühlmittel geschlossen ist.

18. Generator (1) gemäß Anspruch 17,
wobei die weitere Teilkühleinrichtung (16) zur Kühlung der Läuferkomponente (7) ausgebildet ist.

19. Kühleinrichtung für einen Generator (1) nach einem der Ansprüche 10 bis 18.
